(19) Europäisches Patentamt
European Patent Office
Office européen des brevets

(11) **EP 2 577 367 B1**

(12) **FASCICULE DE BREVET EUROPEEN**

(45) Date de publication et mention
de la délivrance du brevet:
**04.12.2024 Bulletin 2024/49**

(21) Numéro de dépôt: **11721334.8**

(22) Date de dépôt: **25.05.2011**

(51) Classification Internationale des Brevets (IPC):
**G02B 5/20** *(2006.01)*     **G02B 5/08** *(2006.01)*
**B32B 17/10** *(2006.01)*     **C03C 17/36** *(2006.01)*

(52) Classification Coopérative des Brevets (CPC):
**G02B 5/208; B32B 17/10036; B32B 17/10229;
C03C 17/36; C03C 17/3613; C03C 17/3626;
C03C 17/3639; C03C 17/3644; C03C 17/3652;
C03C 17/366; C03C 17/3681; G02B 5/0858**

(86) Numéro de dépôt international:
**PCT/EP2011/058569**

(87) Numéro de publication internationale:
**WO 2011/147875 (01.12.2011 Gazette 2011/48)**

(54) **VITRAGE DE CONTROLE SOLAIRE**

SONNENSCHUTZVERGLASUNG

SOLAR CONTROL GLAZING

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **25.05.2010 BE 201000311**

(43) Date de publication de la demande:
**10.04.2013 Bulletin 2013/15**

(73) Titulaire: **AGC Glass Europe
1348 Louvain-la-Neuve (BE)**

(72) Inventeurs:
• **HEVESI, Kadosa
B-6040 Jumet (BE)**
• **SICHA, Jan
B-6040 Jumet (BE)**

(74) Mandataire: **AGC Glass Europe
Technovation Centre
Intellectual Property Department
Rue Louis Blériot 12
6041 Gosselies (BE)**

(56) Documents cités:
EP-A1- 0 645 352     EP-A1- 0 645 352
WO-A1-03/093188     WO-A1-2009/029466
WO-A1-2009/029466   JP-A- H02 111 644
US-A1- 2007 082 186  US-A1- 2007 082 186

**Description**

La présente invention se rapporte à un substrat transparent portant un empilage multicouche de contrôle solaire, ainsi qu'à un vitrage multiple incorporant au moins un tel substrat transparent portant un empilage multicouche de contrôle solaire.

Les empilages de contrôle solaire, aussi appelés empilages antisolaires, auxquels se rapporte la présente invention comprennent des couches fonctionnelles réfléchissant le rayonnement infrarouge, telle que des couches à base d'argent, auxquelles sont associés des revêtements diélectriques anti-réfléchissants qui servent à réduire la réflexion lumineuse et à contrôler d'autres propriétés de l'empilage telles que la couleur, mais qui servent également de revêtements d'accrochage et de protection pour les couches fonctionnelles. Les empilages de contrôle solaire contiennent couramment deux couches fonctionnelles entourées de couches diélectriques. Plus récemment, des empilages à trois couches fonctionnelles ont été proposés afin d'améliorer encore la protection solaire tout en conservant la plus grande transmission lumineuse possible. Chaque couche fonctionnelle est espacée d'au moins un revêtement diélectrique de telle sorte que chaque couche fonctionnelle soit entourée de revêtements diélectriques. Les différentes couches de l'empilage sont, par exemple, déposées par pulvérisation cathodique sous pression réduite assistée par champ magnétique, dans un dispositif bien connu de type magnétron. La présente invention n'est toutefois pas limitée à ce procédé particulier de dépôt de couche.

Ces empilages à contrôle solaire sont utilisés dans la réalisation de vitrages de protection solaire, ou vitrages antisolaires, afin de réduire le risque de surchauffe excessive, par exemple d'un espace clos ayant de grandes surfaces vitrées, dû à l'ensoleillement et ainsi réduire l'effort de climatisation à consentir en été. Le substrat transparent est alors souvent constitué d'une feuille de verre, mais il peut aussi par exemple être formé d'un film plastique tel que du PET (polyéthylène téréphtalate) qui est ensuite enfermé entre deux feuilles de verre à l'intervention d'un film polymère adhésif tel que du PVB (polyvinyle butyrale) ou l'éthylène acétate de vinyle EVA (Ethylene Vinyl Acetate) pour former un vitrage feuilleté, ou enfermé à l'intérieur d'un vitrage multiple.

Dans ce cas, le vitrage doit limiter le rayonnement solaire énergétique total, c'est-à-dire qu'il doit présenter un facteur solaire (FS ou g) relativement faible. Il doit cependant garantir un niveau de transmission lumineuse ($T_L$) le plus élevé possible de manière à procurer un niveau d'éclairement satisfaisant à l'intérieur du bâtiment. Ces exigences quelque peu conflictuelles traduisent la volonté d'obtenir un vitrage présentant une sélectivité (S) élevée, définie par le rapport de la transmission lumineuse au facteur solaire. Ces empilages à contrôle solaire présentent également une faible émissivité qui permet de réduire la déperdition de chaleur par rayonnement infrarouge de grande longueur d'onde. Ils améliorent ainsi l'isolation thermique des grandes surfaces vitrées et réduisent les déperditions d'énergie et les coûts de chauffage en période froide.

La transmission lumineuse ($T_L$) est le pourcentage du flux lumineux incident, de l'Illuminant D65, transmis par le vitrage dans le domaine visible. Le facteur solaire (FS ou g) est le pourcentage du rayonnement énergétique incident qui est d'une part directement transmis par le vitrage et d'autre part absorbé par celui-ci puis rayonné dans la direction opposée à la source d'énergie par rapport au vitrage.

Ces vitrages antisolaires sont en général assemblés en vitrages multiples tels que des vitrages doubles ou triples dans lesquels la feuille de verre portant l'empilage est associée à une ou plusieurs autre feuille de verre, pourvue ou non de revêtement, l'empilage à contrôle solaire multicouche se trouvant au contact de l'espace intérieur entre les feuilles de verre.

Dans certains cas, on est amené à effectuer une opération de renforcement mécanique du vitrage, telle qu'une trempe thermique de la ou des feuilles de verre, pour améliorer la résistance aux contraintes mécaniques. On peut aussi éventuellement être amené à donner une courbure plus ou moins complexe aux feuilles de verre pour des applications particulières, à l'aide d'une opération de bombage à température élevée. Dans les processus de fabrication et de mise en forme des vitrages, il y a certains avantages à effectuer ces opérations de traitement thermique sur le substrat déjà revêtu au lieu de revêtir un substrat déjà traité. Ces opérations sont réalisées à une température relativement élevée, température à laquelle la couche fonctionnelle à base de matériau réfléchissant l'infrarouge, par exemple à base d'argent, a tendance à se détériorer et à perdre ses propriétés optiques et ses propriétés vis-à-vis du rayonnement infrarouge. Ces traitements thermiques consistent notamment à chauffer la feuille vitreuse à une température supérieure à 560°C dans l'air, par exemple entre 560°C et 700°C, et notamment aux environs de 640°C à 670°C, pour une durée d'environ 6, 8, 10, 12 ou même 15 minutes selon le type de traitement et l'épaisseur de la feuille. Dans le cas d'un traitement de bombage, la feuille vitreuse peut alors être bombée selon la forme désirée. Le traitement de trempe consiste alors à refroidir brutalement la surface de la feuille vitreuse, plate ou bombée, par des jets d'air ou de fluide de refroidissement afin d'obtenir un renforcement mécanique de la feuille.

Dans le cas où la feuille de verre revêtue doit subir un traitement thermique, il faut donc prendre des précautions toutes particulières pour réaliser une structure d'empilage qui soit apte à subir un traitement thermique de trempe et/ou de bombage, parfois référencé ci-après par l'expression « trempable », sans perdre ses propriétés optiques et/ou énergétiques qui en font sa raison d'être. Il faut notamment utiliser des matériaux diélectriques, pour former les revêtements diélectriques, qui supportent les températures élevées du traitement thermique sans présenter de modification structurelle néfaste. Des exemples de matériaux particulièrement adéquats pour cette utilisation sont l'oxyde mixte zinc-étain, et notamment le stannate de zinc, le nitrure de silicium et le nitrure d'aluminium. Il faut également veiller à ce que les couches fonctionnelles, par exemple à base d'argent, ne soient pas oxydées en cours de traitement, par exemple en s'assurant qu'il y ait, au moment du traitement, des couches sacrificielles capables de s'oxyder à la place de l'argent en captant l'oxygène libre.

Il est également souhaitable que les vitrages répondent à certains critères esthétiques en termes de réflexion lumineuse ($R_L$), c'est-à-dire le pourcentage du flux lumineux incident -de l'Illuminant D65- réfléchi par le vitrage dans le domaine visible, et de couleur en réflexion et en transmission. La demande du marché est un vitrage à réflexion lumineuse modérée, mais pas trop faible pour éviter l'effet « trou noir » lorsqu'on regarde une façade dans certaines conditions d'éclairage faible. La combinaison d'une haute sélectivité avec une réflexion lumineuse modérée conduit parfois à l'obtention de teintes pourpres en réflexion qui sont très peu esthétiques.

Les vitrages antisolaires sont aussi utilisés dans le domaine des vitrages automobiles, par exemple des pare-brise mais également des autres vitres du véhicule telles les vitres latérales, arrières. Dans ce domaine, les vitres sont souvent feuilletées, c'est-à-dire que le substrat portant l'empilage est associé à un autre substrat transparent, portant ou non un empilage, à l'intervention d'un film plastique adhésif généralement en PVB, l'empilage antisolaire était disposé à l'intérieur du feuilleté au contact du PVB. Les vitres de véhicule doivent généralement être bombées pour s'adapter à la forme du véhicule. Lorsque le substrat est une feuille de verre, l'opération de bombage est réalisée à température élevée et le substrat muni de son empilage est dès lors soumis à un traitement thermique similaire au traitement de trempe, avec refroidissement rapide ou non, décrit ci-dessus avec en plus une opération de mise en forme tant que le substrat est à haute température.

Pour réduire la quantité de chaleur qui pénètre dans le local ou le véhicule au travers du vitrage, on empêche le rayonnement calorifique infrarouge invisible de traverser le vitrage en le réfléchissant. C'est le rôle des couches fonctionnelles à base d'un matériau réfléchissant le rayonnement infrarouge. C'est un élément essentiel dans l'empilage à contrôle solaire.

Plusieurs solutions ont été proposées pour améliorer la protection solaire tout en conservant le maximum de transmission lumineuse, mais aucune solution ne fournit un vitrage vraiment satisfaisant.

La demande de brevet WO 2009/029466 A1 au nom de PPG Industries décrit un vitrage feuilleté pour véhicule automobile dans lequel une feuille de verre porte un empilage à trois couches fonctionnelles à base d'argent. Les couches d'argent ont une épaisseur décroissante à partir de la feuille de verre qui les porte. Ce document décrit un empilage à transmission lumineuse élevée pouvant être utilisé pour former un pare-brise de véhicule automobile. Toutefois, la sélectivité de cet empilage est relativement faible.

La demande de brevet EP 645352 A1 déposée par Saint-Gobain Vitrage décrit un vitrage antisolaire dont l'empilage comporte trois couches d'argent à épaisseur croissante en partant du verre.

Le document JPH02111644A décrit des vitrages comportant des systèmes de couches alternant des couches fonctionnelles à base d'argent et des revêtements d'oxyde d'indium et d'étain (ITO).

La publication WO2003/093188 divulgue un substrat selon l'art antérieur.

Toutefois, selon les exemples 1 et 2 du document, soit la sélectivité est relativement faible, soit la teinte en réflexion est peu stable et fort sensible aux fluctuations des épaisseurs en cours de fabrication ou au manque d'uniformité transversale.

L'un des objets de l'invention est de fournir un substrat transparent portant un empilage multicouche de contrôle solaire qui assure une protection solaire efficace avec une sélectivité élevée.

Un autre objet de l'invention est que le substrat revêtu présente un aspect plaisant, tant en transmission qu'en réflexion côté substrat, répondant à la demande commerciale, par exemple ayant notamment une teinte relativement neutre.

Un autre objet de l'invention est de permettre d'obtenir plus aisément un substrat revêtu qui présente une bonne stabilité angulaire de la teinte en réflexion, c'est-à-dire ayant une variation de teinte de très faible amplitude ou d'amplitude acceptable sans modification majeure de nuance de la teinte.

Un autre objet de l'invention est de fournir un substrat revêtu qui présente une faible variation de la teinte en réflexion observée côté substrat lorsqu'il y a une fluctuation des épaisseurs de couches pendant la durée de fabrication d'un lot de substrats revêtus ou un manque d'uniformité transversale suite à un taux de dépôt variable sur la longueur des cathodes.

Un autre objet de l'invention est de fournir un substrat revêtu pouvant être produit aisément en grande série à l'échelle industrielle à un prix de revient avantageux.

L'invention se rapporte à un substrat transparent portant un empilage multicouche de contrôle solaire comprenant trois couches fonctionnelles à base d'un matériau réfléchissant le rayonnement infrarouge et quatre revêtements diélectriques de telle sorte que chaque couche fonctionnelle soit entourée par des revêtements diélectriques, caractérisé en ce que l'épaisseur géométrique de la deuxième couche fonctionnelle en partant du substrat est inférieure d'au moins 4% aux épaisseurs géométriques des première et troisième couches fonctionnelles et caractérisé en ce que le rapport de l'épaisseur optique du revêtement diélectrique disposé entre la deuxième et la troisième couche fonctionnelle sur l'épaisseur géométrique de la troisième couche fonctionnelle en partant du substrat est compris entre 5,5 et 10.

On a trouvé que cette caractéristique facilite l'obtention aisée de substrat revêtu à haute performance antisolaire, c'est-à-dire à haute transmission lumineuse combinée à une haute sélectivité, ayant un aspect esthétique agréable et stable. On a trouvé aussi que cette caractéristique selon laquelle l'épaisseur de la première couche fonctionnelle, ainsi que l'épaisseur de la troisième couche fonctionnelle, est significativement (au moins 4%) supérieure à l'épaisseur de la deuxième couche fonctionnelle permet d'atteindre plus aisément une valeur de b* en transmission inférieure ou égale à 4 et une variation angulaire, entre 0° et 55°, de a* en réflexion côté substrat comprise entre -3,6 et 2. Les variations de teinte a* et b* selon l'angle d'observation peuvent être relativement faibles. On observe également que l'on peut aisément atteindre une grande stabilité des tolérances de fabrication lorsqu'on examine le substrat revêtu en réflexion côté substrat.

Ce résultat est surprenant car, étant donné la complexité interférentielle d'un empilage multicouche de ce type, on s'attend typiquement à une relativement forte variabilité des teintes observées en réflexion côté substrat par rapport à une variation de l'angle d'observation et par rapport à des fluctuations d'épaisseur en cours de production.

La variation de l'indice de réfraction des différents matériaux, formant des revêtements diélectriques transparents, selon la longueur d'onde peut être sensiblement différente. Dans le cadre de la présente invention, l'épaisseur optique des diélectriques sera calculée en utilisant la formule suivante :

$$\text{épaisseur optique} = d \text{ multiplié par } n_v,$$

dans laquelle d est l'épaisseur géométrique (physique) de la couche considérée et $n_v$ est un indice de réfraction virtuel obtenu à l'aide de la formule suivante :

$$n_v = \left(0{,}6902 \times n(550)^2\right) - \left(0{,}165 \times n(550)\right) - 0{,}4643$$

dans laquelle $n(550)$ est l'indice de réfraction du matériau à la longueur d'onde de 550 nm.

Si un revêtement diélectrique est composé de plusieurs couches, l'épaisseur optique totale du revêtement diélectrique à considérer est la somme des épaisseurs optiques des différentes couches. Lorsque la couche barrière de protection de la couche fonctionnelle est une couche de métal sacrificiel, cette couche est en fait oxydée et transformée en diélectrique transparent dans le produit fini. Cette couche étant très mince a peu d'influence sur les propriétés optiques. Toutefois, si l'empilage multicouche doit supporter un traitement thermique à température élevée telle qu'une trempe et/ou un bombage, cette couche de métal sacrificiel est rendue plus épaisse pour former une réserve métallique à oxyder suffisante pour protéger la couche fonctionnelle. Substantiellement toute l'épaisseur de cette couche est transformée en oxyde. Dans les différents calculs de rapport d'épaisseur selon l'invention incluant des épaisseurs de revêtement diélectrique, l'épaisseur de cette couche de métal sacrificiel oxydé doit être incluse dans l'épaisseur totale du revêtement diélectrique concerné pour autant que son épaisseur physique sous forme oxydée dépasse 2,5 nm, ce qui correspond à environ 1,4 nm de métal tel que déposé pour une barrière en Ti. Les calculs de rapports ne tiennent ainsi pas compte de la mince couche barrière habituellement utilisée dans les empilages qui ne doivent pas subir de traitement thermique à température élevée. L'épaisseur de la portion de la couche restée éventuellement sous forme métallique, pouvant servir notamment de couche absorbante, ne doit bien sûr pas être incluse. Si une couche externe de protection en métal sacrificielle est utilisée pour protéger l'empilage en attente de traitement thermique et oxydée par ce traitement dans le produit fini, l'épaisseur de la couche oxydée doit être comptée dans les calculs de rapports. Il en est de même aussi si le métal sacrificiel est nitruré et forme un diélectrique transparent.

Dans la présente description, lorsque des épaisseurs géométriques de couches d'un empilage multicouche sont données, ou lorsqu'on se réfère à des épaisseurs géométriques, elles sont tout d'abord mesurées de manière globale sur le substrat revêtu à l'aide d'un appareil de fluorescence des rayons X (XRF) avec détection à dispersion de longueur d'onde (WDS). Cet appareil est calibré pour chaque matériau sur base de 5 à 10 échantillons revêtus du matériau considéré dans des épaisseurs connues, réparties entre 2 et 300 nm, tant en monocouches qu'en couches intercalées dans des empilages variés. Si un matériau est présent en couches multiples dans un empilage, l'épaisseur totale de ce matériau est déduite d'une analyse XRF telle que décrite ci-dessus puis, la répartition de l'épaisseur totale sur chacune des couches individuelles de l'empilage est distribuée à l'aide d'une mesure en profilage de l'empilage, par exemple à l'aide d'un profilage XPS (X-ray Photoelectron Spectroscopy avec un canon de profilage utilisant des ions d'argon dans la gamme d'énergie de 1 à 3 keV).

La stabilité de la teinte dans une fabrication en série à grande échelle est un élément important pour garantir la fabrication d'un produit de qualité constante. A des fins de comparaison, la variation de la teinte en réflexion suite à une fluctuation des épaisseurs des couches a été quantifiée à l'aide d'une formule mathématique. L'index de variation de teinte en fabrication a été appelé « Deltacol » et a été défini par la relation suivante :

$$Deltacol = 0,5x\left(\sqrt{\frac{\Delta a*}{1,2}} + \sqrt{\frac{\Delta b*}{2,4}}\right)$$

dans laquelle $\Delta a*$ et $\Delta b*$ sont les différences entre les valeurs les plus élevées et les valeurs les plus faibles respectivement de a* et de b* trouvées lorsque les épaisseurs de chaque couche d'argent et de chaque revêtement diélectrique de l'empilage varie individuellement de plus ou moins 2,5%. Les valeurs a* et b* sont les valeurs CIELAB 1976 L*a*b* mesurées sous l'Illuminant D65/10°.

De préférence, l'épaisseur géométrique de la deuxième couche fonctionnelle en partant du substrat est inférieure d'au moins 8% à l'épaisseur géométrique de la troisième couche fonctionnelle.

De préférence, l'épaisseur géométrique de la deuxième couche fonctionnelle en partant du substrat est inférieure d'au moins 8% aux épaisseurs géométriques des première et troisième couches fonctionnelles.

De préférence, l'épaisseur géométrique de la deuxième couche fonctionnelle en partant du substrat est inférieure d'au moins 15% à l'épaisseur géométrique de la troisième couche fonctionnelle.

De préférence, le rapport de l'épaisseur optique du troisième revêtement diélectrique D3 disposé entre la deuxième et la troisième couches fonctionnelles sur l'épaisseur optique du revêtement diélectrique final D4 disposé au-delà de la troisième couche fonctionnelle en partant du substrat est inférieur à 2,6, avantageusement inférieur à 2,2 et favorablement inférieur à 2. Ce rapport D3 sur D4 est de préférence supérieur à 1,3 et avantageusement supérieur à 1,4. Ce rapport est favorablement compris entre 1,3 et 2,6 et de préférence entre 1,5 et 2,1, particulièrement pour l'obtention d'une transmission lumineuse élevée.

Selon l'invention, le rapport de l'épaisseur optique du troisième revêtement diélectrique D3 disposé entre la deuxième et la troisième couche fonctionnelle sur l'épaisseur géométrique de la troisième couche fonctionnelle en partant du substrat est compris entre 5,5 et 10, avantageusement entre 6,6 et 9,3, et favorablement compris entre 7 et 9.

De préférence, le rapport de l'épaisseur optique du premier revêtement diélectrique D1 disposé entre le substrat et la première couche fonctionnelle sur l'épaisseur optique du dernier revêtement diélectrique disposé au-delà de la troisième couche fonctionnelle est compris entre 0,5 et 2,7, avantageusement entre 0,8 et 2,3, et favorablement compris entre 1,3 et 2,3. Ce rapport est favorablement compris entre 0,8 et 2, particulièrement pour l'obtention d'une transmission lumineuse élevée.

De préférence, le rapport de l'épaisseur optique du troisième revêtement diélectrique D3 sur l'épaisseur optique du second revêtement diélectrique D2 disposé entre la première couche fonctionnelle en partant du substrat et la seconde couche fonctionnelle est compris entre 0,4 et 1,1, avantageusement entre 0,4 et 0,95, et favorablement entre 0,4 et 0,85.

De préférence, le rapport de l'épaisseur optique du second revêtement diélectrique D2 sur l'épaisseur optique du premier revêtement diélectrique D1 est compris entre 1,15 et 3,4, de préférence entre 1,4 et 3,4 et avantageusement entre 1,4 et 2,8. Ce rapport est favorablement compris entre 1,6 et 2,1, particulièrement pour l'obtention d'une transmission lumineuse élevée.

Le respect de ces différents rapports entre les épaisseurs optiques des revêtements diélectriques et/ou les épaisseurs géométriques des couches fonctionnelles discutés ci-avant favorise l'obtention d'un empilage à haute performance énergétique de contrôle solaire, tout en conservant une transmission lumineuse relativement élevée, ayant une teinte agréable et stable et une sélectivité élevée, tout particulièrement lorsque ces rapports sont réalisées tous en combinaison. Cet empilage peut être aisément fabriqué en grande série dans une installation industrielle car il présente une bonne stabilité de teinte dans une tolérance de fabrication facile à respecter. On a trouvé qu'on peut aussi obtenir plus aisément un niveau de réflexion examiné côté empilage plus faible et notamment inférieur à 20%. De cette façon, la réflexion à l'intérieur d'un local, lorsque l'empilage est disposé en position 2 (la position 1 étant de manière conventionnelle la face extérieure), n'est pas trop élevée pour ne pas gêner la vision au travers du substrat revêtu.

Comme il a été dit ci-avant, les couches fonctionnelles sont avantageusement formées à partir de métal noble. Elles peuvent être à base d'argent, d'or, de palladium, de platine ou leur mélange ou alliage, mais aussi à base de cuivre ou d'aluminium, seul, en alliage ou en alliage avec un ou plusieurs des métaux nobles. De préférence, toutes les couches fonctionnelles sont à base d'argent. C'est un métal noble qui présente une très grande efficacité de réflexion du rayonnement infrarouge. Il est mis en oeuvre aisément dans un dispositif magnétron et son prix de revient n'est pas prohibitif, surtout eu égard à son efficacité. Avantageusement, l'argent est dopé avec quelques pourcents de palladium, d'aluminium ou du cuivre, à raison par exemple de 1 à 10%, ou on peut utiliser un alliage d'argent.

De préférence, la variation de teinte Deltacol (telle que définie ci-dessus) en réflexion regardée côté substrat est inférieure à 3,4, avantageusement inférieure à 3, préférentiellement inférieure à 2,6 et favorablement inférieure à 2,2. On obtient ainsi un substrat revêtu dont l'aspect en réflexion côté substrat est peu sensible aux aléas de la fabrication en série à l'échelle industrielle qui peuvent engendrer des fluctuations dans les épaisseurs des couches en cours de production.

De préférence, la variation de teinte Deltacol en réflexion regardée côté empilage est inférieure à 6, avantageusement inférieure à 4, et préférablement inférieure à 2,8. De même, on obtient ainsi un substrat revêtu dont l'aspect en réflexion côté empilage est peu sensible aux aléas de la fabrication en série à l'échelle industrielle qui peuvent engendrer des fluctuations dans les épaisseurs des couches en cours de production.

De préférence, les variations de a* en réflexion côté substrat, lors d'une variation de l'angle d'observation comprise entre 0 et 55°, sont d'au plus 3,5 en valeur absolue, avantageusement d'au plus 2. Ceci donne une stabilité de teinte particulièrement avantageuse, car l'aspect global d'une façade varie peu selon l'angle d'observation, par exemple selon le déplacement de l'observateur.

De préférence, les variations de b* en réflexion côté substrat, lors d'une variation de l'angle d'observation comprise entre 0 et 55°, sont d'au plus 5 en valeur absolue, avantageusement d'au plus 4. Ceci donne également, en particulier en combinaison avec une teinte nominale à dominante bleue et la faible variation de a*, une stabilité de teinte particulièrement avantageuse.

De préférence, le substrat portant l'empilage présente une sélectivité supérieure à 1,9, avantageusement supérieure à 1,94 et favorablement supérieure à 1,98 lorsque l'empilage est déposé sur une feuille de verre float clair sodo-calcique ordinaire de 6 mm d'épaisseur et que cette feuille revêtue est montée en double vitrage avec une autre feuille de verre float clair sodo-calcique ordinaire de 4 mm d'épaisseur non revêtue.

Les revêtements diélectriques transparents sont bien connus dans le domaine des couches déposées par pulvérisation cathodique. Les matières adéquates sont nombreuses et il n'est pas utile d'en faire la liste complète ici. Ce sont en général des oxydes, oxy-nitrures ou nitrures métalliques. Parmi les plus courantes, on peut citer à titre d'exemple $SiO_2$, $TiO_2$, $SnO_2$, ZnO, ZnAlOx, $Si_3N_4$, AlN, $Al_2O_3$, $ZrO_2$, $Nb_2O_5$, YOx TiZrYOx, TiNbOx, HfOx, MgOx, TaOx, CrOx et $Bi_2O_3$, et leurs mélanges. On peut également citer les matériaux suivants : AZO, ZTO, GZO, NiCrOx, TXO, ZSO, TZO, TNO, TZSO, TZAO et TZAYO. L'expression « AZO » se rapporte à un oxyde de zinc dopé avec de l'aluminium ou à un oxyde mixte de zinc et d'aluminium, obtenu de préférence à partir d'une cathode céramique formée par l'oxyde à déposer, soit en atmosphère neutre ou légèrement oxydante. De même, les expressions ZTO ou GZO se rapportent respectivement à des oxydes mixtes de titane et de zinc ou de zinc et de gallium, obtenus à partir de cathodes céramiques, soit en atmosphère neutre ou légèrement oxydante. L'expression TXO se rapporte à de l'oxyde de titane obtenu à partir d'une cathode céramique d'oxyde de titane. L'expression ZSO se rapporte à un oxyde mixte zinc-étain obtenu soit à partir d'une cathode métallique de l'alliage déposé sous atmosphère oxydante ou à partir d'une cathode céramique de l'oxyde correspondant, soit en atmosphère neutre ou légèrement oxydante. Les expressions TZO, TNO, TZSO, TZAO ou TZAYO se rapportent respectivement à des oxydes mixtes titane-zirconium, titane-niobium, titane-zirconium-étain, titane-zirconium-aluminium ou titane-zirconium-aluminium-yttrium, obtenus à partir de cathodes céramiques, soit en atmosphère neutre ou légèrement oxydante. Tous ces matériaux cités ci-avant peuvent être utilisés pour former les revêtements diélectriques transparents utilisés dans la présente invention.

De préférence, au moins un des revêtements diélectriques comprend au moins une couche à base d'un oxyde mixte zinc-étain contenant au moins 20% en poids d'étain, par exemple environ 50% pour former $Zn_2SnO_4$. Cet oxyde est très utile en tant que revêtement diélectrique dans un empilage apte à subir un traitement thermique.

De préférence, le revêtement diélectrique inférieur disposé entre la feuille de matière vitreuse et la couche fonctionnelle comprend au moins un oxyde mixte zinc-étain contenant au moins 20% en poids d'étain, et le revêtement diélectrique externe comprend également au moins un oxyde mixte zinc-étain contenant au moins 20% en poids d'étain. Cette disposition est très favorable pour protéger la couche fonctionnelle aussi bien vis-à-vis de l'oxydation provenant de l'extérieur que de l'oxygène provenant de la matière vitreuse.

De préférence, le revêtement diélectrique disposé sous une ou sous chaque couche fonctionnelle comprend une couche à base d'un oxyde de zinc, éventuellement dopé par exemple à l'aluminium ou au gallium, en contact direct avec la ou les couches fonctionnelles. L'oxyde de zinc peut avoir un effet particulièrement favorable sur la stabilité et la résistance à la corrosion de la couche fonctionnelle, notamment lorsqu'il s'agit d'argent. Il est également favorable à l'amélioration de la conductibilité électrique d'une couche à base d'argent, et donc à l'obtention d'une faible émissivité, notamment lors du traitement thermique.

Avantageusement, le revêtement diélectrique disposé sous chaque couche fonctionnelle comprend une couche à base d'un oxyde mixte zinc-étain n'ayant pas plus d'environ 20% en poids d'étain et au moins environ 80% en poids de zinc, de préférence pas plus d'environ 10% d'étain et au moins environ 90% de zinc, en contact direct avec la ou les couches fonctionnelles. Cet oxyde mixte à haute teneur en oxyde de zinc sous et en contact direct avec la couche fonctionnelle, particulièrement lorsqu'elle est à base d'argent, est avantageux pour la tenue de la couche fonctionnelle au traitement thermique à haute température du type trempe et/ou bombage. L'association de cet oxyde mixte à haute teneur en zinc sous la couche fonctionnelle avec un oxyde mixte zinc-étain contenant au moins 20% en poids d'étain dans les diélectriques inférieur et externe constitue la structure la plus avantageuse pour la bonne tenue de l'empilage lors d'un traitement thermique à haute température.

De préférence, le substrat est une feuille de verre sodo-calcique ordinaire. C'est le substrat le mieux adapté pour servir de base à un vitrage à contrôle solaire. De préférence, le substrat est une feuille de verre extra-clair ayant une transmission lumineuse supérieure à go%, voire supérieure ou égale à 91%, et même supérieure ou égale à 92%. Un substrat particulièrement préféré est le verre vendu sous la marque CLEARVISION® par la société AGC Glass Europe.

Selon un mode de réalisation avantageux, l'empilage comprend au moins une couche absorbante de telle sorte que, lorsque l'empilage est déposé sur une feuille de verre clair ordinaire de 6 mm d'épaisseur, l'absorption lumineuse totale $A_L$ du substrat revêtu mesurée côté substrat est d'au moins 25%, de préférence d'au moins 30% et avantageusement d'au moins 33%. La transmission lumineuse en vitrage simple tel que décrit est dans ce cas inférieure ou égale à 64%, de préférence inférieure à 61%. La couche absorbante peut avoir un caractère métallique comme décrit dans la demande de brevet déposée le même jour au nom de la demanderesse et intitulée « Vitrage de contrôle solaire à faible facteur solaire » ou elle peut être formée d'une matière diélectrique telle que TiN, NbN, TaN ou un oxyde absorbant comme $WO_3$, $Fe_2O_3$, l'oxyde de l'acier inoxydable SSOx, ou encore une forme sous-stoechiométrique absorbante. On a découvert qu'avec la configuration particulière des couches fonctionnelles selon l'invention, la couche absorbante ne doit pas nécessairement être disposée dans le premier et/ou le dernier revêtement diélectrique, ce qui est avantageux du point de vue du processus de fabrication et permet une plus grande flexibilité de mise au point de l'empilage désiré. De plus, l'index de variation de teinte Deltacol obtenu est plus faible que selon l'art antérieur discuté ci-avant.

L'invention s'étend à un vitrage multiple comprenant au moins un substrat portant un empilage multicouche de contrôle solaire tel que décrit ci-dessus. Le substrat est de préférence une feuille de verre sodo-calcique ordinaire, et avantageusement un verre extra-clair ayant une transmission lumineuse supérieur à 90% comme discuté ci-dessus, tel que le verre vendu sous la marque CLEARVISION® par la société AGC Glass Europe. L'invention fournit un vitrage multiple antisolaire très utile.

Le substrat revêtu de l'empilage multicouche est de préférence assemblé en vitrage multiple, par exemple en double ou en triple vitrage, de telle sorte que, lorsqu'il est monté sur un bâtiment, le rayonnement solaire frappe d'abord la feuille de verre revêtue du côté dépourvu d'empilage, puis l'empilage, puis la seconde feuille de verre, et puis éventuellement la troisième s'il s'agit du triple vitrage. L'empilage se trouve donc, selon la convention généralement utilisée, en position 2. C'est dans cette position que la protection solaire est la plus efficace.

De préférence, lorsque le substrat portant l'empilage multicouche est une feuille de verre clair ordinaire de 6 mm et qu'elle est montée en vitrage double avec une feuille de verre clair ordinaire sans revêtement de 4 mm d'épaisseur, le vitrage double ainsi formé possède un facteur solaire inférieur à 39%, avantageusement compris entre 14 et 36% et favorablement compris entre 18 et 34%, une transmission lumineuse comprise entre 30 et 72%, avantageusement comprise entre 38 et 69% et favorablement comprise entre 45 et 64%, une réflexion lumineuse extérieure, donc côté verre de la feuille de verre revêtue, comprise entre 7 et 25%, de préférence entre 11 et 19%, avec une teinte en réflexion extérieure bleutée caractérisée par une valeur de b* inférieure ou égale à a*, avec de préférence a*>-5, et avantageusement compris entre -1 et -3. La variation angulaire de la valeur a* de la teinte en réflexion lumineuse extérieure entre 0° et 55° est de préférence comprise entre -3,6 et 2. La teinte en transmission est de préférence caractérisée par une valeur de b* inférieure ou égale à 4, avantageusement inférieure ou égale à 3.

Selon un mode de réalisation préféré, lorsque le substrat portant l'empilage multicouche est une feuille de verre clair ordinaire de 6 mm et qu'elle est montée en vitrage double avec une feuille de verre clair ordinaire sans revêtement de 4 mm d'épaisseur, le vitrage double ainsi formé possède un facteur solaire compris entre 25 et 34%, avantageusement compris entre 27 et 31%, et une transmission lumineuse supérieure à 55%, avantageusement comprise entre 57 et 72%. On peut ainsi obtenir un vitrage transparent formant un écran antisolaire efficace allié à une transmission lumineuse élevée.

Selon un autre mode de réalisation préféré, lorsque le substrat portant l'empilage multicouche est une feuille de verre clair ordinaire de 6 mm et qu'elle est montée en vitrage double avec une feuille de verre clair ordinaire sans revêtement de 4 mm d'épaisseur, le vitrage double ainsi formé possède un facteur solaire compris entre 18 et 27%, avantageusement compris entre 21 et 26%, et une transmission lumineuse comprise entre 35 et 55%, avantageusement comprise entre 40 et 52%. On peut ainsi obtenir un vitrage transparent formant un écran antisolaire très efficace particulièrement adapté pour des régions très ensoleillées.

L'invention s'étend aussi à un vitrage feuilleté comprenant au moins un substrat transparent tel que décrit ci-dessus assemblé à une feuille de matière vitreuse à l'intervention d'une matière plastique adhésive. Un tel vitrage est avantageusement utilisé comme vitrage d'un véhicule automobile.

L'invention sera maintenant décrite plus en détail, de manière non limitative, à l'aide des exemples de réalisations préférées ci-après.

**Exemples** :

**Exemple 1.**

Une feuille de verre float clair sodo-calcique ordinaire de 3,2 m sur 1 m et de 6 mm d'épaisseur est placée dans un dispositif de pulvérisation cathodique, assisté d'un champ magnétique, à pression réduite (environ 0,3 Pa) du type magnétron. Sur cette feuille de verre, on dépose un empilage à contrôle solaire multicouche qui comprend, en séquence :

Un premier revêtement diélectrique est déposé sur la feuille de verre. Ce premier revêtement est formé de deux couches d'oxydes mixtes de zinc-étain déposés dans une atmosphère réactive constituée d'un mélange d'argon et d'oxygène, à partir de cathodes d'alliages zinc-étain de compositions différentes. Le premier oxyde mixte zinc-étain est formé à partir de cathodes d'un alliage zinc-étain à 52% en poids de zinc et 48% en poids d'étain pour former la structure spinelle de stannate de zinc $Zn_2SnO_4$. Le second oxyde mixte de zinc-étain $ZnSnO_x$, d'environ 9,2 nm d'épaisseur géométrique, est déposé à partir de cibles d'un alliage zinc-étain à 90% en poids de zinc et 10% en poids d'étain. L'épaisseur de la première couche d'oxydes mixtes de zinc-étain est le complément par rapport à l'épaisseur de la seconde couche pour atteindre l'épaisseur géométrique correspondante à l'épaisseur optique du premier revêtement diélectrique D1 indiquée dans le tableau 1 ci-dessous.

Une couche fonctionnelle IR1 réfléchissant l'infrarouge formée d'argent à partir d'une cible d'argent pratiquement pur dans une atmosphère neutre d'argon est ensuite déposée sur le premier revêtement diélectrique D1. L'épaisseur géométrique de cette couche IR1 est donnée dans le tableau 1.

Une couche de protection de 1,4 nm en métal sacrificiel Ti est déposée à partir d'une cible de titane en atmosphère neutre directement sur la couche d'argent en ayant une interface commune avec elle. L'atmosphère oxydante du plasma lors du dépôt de la couche suivante, décrit ci-après, va oxyder cette couche sacrificielle de titane. Pour un empilage destiné à subir un traitement de trempe, de bombage et/ou de durcissement (qui est un traitement de trempe dans lequel le refroidissement rapide est moins prononcé), on déposerait dans les mêmes conditions 2,6 à 3,2 nm de titane. L'épaisseur de la couche de protection transformée en oxyde qui dépasse 2,5 nm (valeur correspondante en oxyde aux 1,4 nm d'épaisseur géométrique de Ti de la couche de protection telle que déposée dans le cas d'un empilage non trempable) devra être additionnée à l'épaisseur du revêtement diélectrique qui suit pour le calcul des rapports selon l'invention.

De la même manière, les couches suivantes sont ensuite déposées sur la couche de protection :

Un second revêtement diélectrique D2, une deuxième couche fonctionnelle IR2, une couche sacrificielle de Ti de 1,4 nm, un troisième revêtement diélectrique D3, une troisième couche fonctionnelle IR3, une couche sacrificielle de Ti de 1,4 nm, suivi d'un quatrième et dernier revêtement diélectrique D4. Ce quatrième revêtement diélectrique D4 est formé de deux couches d'oxydes mixtes de zinc-étain déposés dans une atmosphère réactive constituée d'un mélange d'argon et d'oxygène à partir de cathodes d'alliages zinc-étain de compositions différentes. Le premier oxyde mixte de zinc-étain $ZnSnO_x$, d'environ 8 nm d'épaisseur géométrique, est déposé à partir de cibles d'un alliage zinc-étain à 90% en poids de zinc et 10% en poids d'étain, ci-après dénommé ZSO9. Le second oxyde mixte zinc-étain est formé à partir de cathodes d'un alliage zinc-étain à 52% en poids de zinc et 48% en poids d'étain pour former la structure spinelle de stannate de zinc $Zn_2SnO_4$, ci-après dénommé ZSO5. L'épaisseur de cette seconde couche d'oxydes mixtes de zinc-étain est le complément par rapport à l'épaisseur de la première couche pour atteindre l'épaisseur géométrique correspondante à l'épaisseur optique du quatrième revêtement diélectrique D4 indiquée dans le tableau 1 ci-dessous.

Les seconde et troisième couches fonctionnelles réfléchissant l'infrarouge, IR2 et IR3, sont formées d'argent à partir d'une cible d'argent pratiquement pur pulvérisée dans une atmosphère neutre d'argon, de la même manière que la couche IR1.

Les second et troisième revêtements diélectriques, respectivement D2 et D3, sont formés chacun respectivement de deux couches d'oxydes mixtes de zinc-étain déposées dans une atmosphère réactive constituée d'un mélange d'argon et d'oxygène à partir de cathodes d'alliages zinc-étain de compositions différentes. Le premier oxyde mixte zinc-étain de chacun de ces deux revêtements diélectriques est formé à partir de cathodes d'un alliage zinc-étain à 52% en poids de zinc et 48% en poids d'étain pour former la structure spinelle de stannate de zinc $Zn_2SnO_4$. Le second oxyde mixte de zinc-étain $ZnSnO_x$, de chacun de ces deux revêtements diélectriques, d'environ 16 nm d'épaisseur géométrique, est déposé à partir de cibles d'un alliage zinc-étain à 90% en poids de zinc et 10% en poids d'étain. L'épaisseur de la première couche d'oxydes mixtes de zinc-étain de chacun de ces deux revêtements est le complément par rapport à l'épaisseur de la seconde couche de chacun de ces deux revêtements pour atteindre l'épaisseur géométrique correspondante respectivement aux épaisseurs optiques des deuxième et troisième revêtements diélectriques D2 et D3 indiquées dans le tableau 1 ci-dessous.

Dans le tableau 1, on a aussi indiqué les valeurs des différents rapports d'épaisseurs des revêtements diélectriques et couches fonctionnelles discutés ci-avant. Comme discuté ci-dessus, ces rapports sont calculés sans tenir compte de l'épaisseur des couches de métal sacrificiel de protection, chacune de 1,4 nm de Ti.

Cette feuille de verre revêtue est ensuite assemblée en double vitrage avec une autre feuille de verre clair de 4 mm, le revêtement étant disposé du côté de l'espace intérieur du double vitrage. L'espace entre les deux feuilles est de 15 mm et l'air y est remplacé à 90% par de l'argon. En observant le double vitrage côté verre du substrat revêtu, l'empilage étant placé en position 2, c'est-à-dire qu'on voit d'abord le vitrage pourvu de l'empilage observé côté verre, puis la feuille de verre clair sans couche, on note les propriétés optiques et thermiques indiquées dans le tableau 2. Dans la présente invention, les conventions suivantes sont utilisées pour les valeurs mesurées ou calculées. La transmission lumineuse ($T_L$), la réflexion lumineuse ($R_L$), l'absorption lumineuse ($A_L$) (pourcentage du flux lumineux -de l'Illuminant D65/2°- absorbé par le vitrage dans le domaine visible) sont mesurées avec l'Illuminant D65/2°. En ce qui concerne la teinte en réflexion et la teinte en transmission, les valeurs CIELAB 1976 (L*a*b*) sont mesurées avec l'Illuminant D65/10°. Le facteur solaire (FS ou g) est calculé selon la norme EN410.

Dans le tableau 2, les valeurs de sélectivité (S) et de Deltacol sont également indiquées, ainsi que les valeurs des variations de a* et b* en réflexion côté substrat lors d'une variation de l'angle d'observation entre 0 et 55°, appelées respectivement « Shift a* » et « Shift b* ». Deltacol (Rv) signifie que l'indice de variation est obtenu en réflexion côté substrat, tandis que Deltacol (Rc) signifie que l'indice de variation est obtenu côté empilage. Pour les valeurs de teintes, « ($T_L$) » signifie que la valeur est mesurée en transmission, « (Rc) » signifie que la valeur est mesurée en réflexion côté empilage (couche) et « (Rv) » signifie que la valeur est mesurée en réflexion côté substrat (verre). La colonne $A_E$ du tableau 2 reprend les valeurs d'absorption énergétique du substrat revêtu en feuille simple, calculées selon la norme EN410. L'indice de réfraction $n(550)$, à la longueur d'onde de 550 nm, des matériaux diélectriques ZSO5 et ZSOg est de 2,03.

On constate que les teintes en réflexion obtenues sont agréables et correspondent à la demande commerciale. Le niveau de réflexion côté substrat n'est pas trop faible, ce qui évite le « trou noir » tout en évitant l'effet miroir. Les variations angulaires de teinte sont faibles et tout à fait acceptables, et la stabilité de fabrication est particulièrement bonne.

En variante, on a remplacé l'oxyde mixte zinc-étain des différents revêtements diélectriques par une des successions suivantes de couches pour D1, D2 et/ou D3 : TiO$_2$/ZnO :Al ou TZO/TiO$_2$/ZnO ou SnO$_2$/ZnO/SnO$_2$/ZnO ou ZnO:Al/ZSO$_5$/ZnO, par une des successions suivantes pour D1 : Si$_3$N$_4$/ZnO ou AlN/ZnO, et une des successions suivantes pour D4: ZnO/SnO$_2$ ou ZnO/TZO ou ZnO:Al/ZSO5 ou ZnO/SnO$_2$/Si$_3$N$_4$ ou ZnO/SnO$_2$/AlN, avec optionnellement une couche de protection externe. A chaque fois, les épaisseurs géométriques des différents constituants ont été adaptées en fonction de leur indice de réfraction virtuel (tel que décrit plus haut) pour obtenir l'épaisseur optique du revêtement diélectrique correspondant telle qu'indiquée dans le tableau 1. L'indice de réfraction $n(550)$ réel, à la longueur d'onde de 550 nm, des matériaux diélectriques utilisés sont les suivants : pour TiO$_2$, $n(550) = 2,5$ ; pour Si$_3$N$_4$, $n(550) = 2,04$ ; pour Al$_2$O$_3$, $n(550) = 1,8$ ; pour ZSO5 et ZSO9, $n(550) = 2,03$; pour AlN, $n(550) = 1,9$ ; et pour TZO, $n(550) = 2,26$. On a obtenu sensiblement les mêmes propriétés.

En variante, les couches de protection déposées directement sur les couches d'argent IR1, IR2 et/ou IR3 sont de fines couches de 2 nm de TiOx ou de ZnOx éventuellement dopé à l'aluminium, déposées en atmosphère neutre à partir de cathodes céramiques respectivement d'oxyde de titane ou de zinc, éventuellement dopés. Lorsque les trois couches de protection sont ainsi formées par du TiOx déposé à partir d'une cathode céramique, le gain en transmission lumineuse TL est de 8% en feuille monolithique par rapport à une couche de protection formée d'un métal sacrificiel Ti oxydé par le processus de dépôt en atmosphère oxydante du revêtement diélectrique suivant. Lorsque les trois couches de protection sont ainsi formées par du ZnO:Al (2% en poids d'aluminium) déposé à partir d'une cathode céramique, le gain en transmission lumineuse TL est de 3% en feuille monolithique par rapport à une couche de protection formée d'un métal sacrificiel Ti oxydé par le processus de dépôt en atmosphère oxydante du revêtement diélectrique suivant.

Selon d'autres variantes encore, on a remplacé dans le revêtement diélectrique transparent D4 la séquence d'oxydes mixtes de zinc-étain par la séquence ZnO:Al/TiO$_2$ ou TZO, par la séquence ZnO:Al/SnO$_2$/TiO$_2$ ou TZO, ou encore par la séquence ZnO:Al/ZSO5/TiO$_2$ ou TZO.

**Exemples 2 à 6.**

Les exemples 2 à 6 ont été réalisés de la même manière, selon les mêmes structures et avec les mêmes matériaux que l'exemple 1. Dans ces exemples toutefois, les épaisseurs optiques des différents revêtements et les épaisseurs géométriques des différentes couches fonctionnelles ont été modifiées selon les indications du tableau 1. En ce qui concerne les revêtements diélectriques, le même principe que dans l'exemple 1 a été utilisé, c'est-à-dire qu'ils sont formés de deux couches dont une des couches a une épaisseur fixe et l'autre couche a l'épaisseur complémentaire pour obtenir l'épaisseur optique indiquée dans le tableau.

**Exemple comparatif 1**.

L'exemple comparatif 1 (Comp. 1), repris dans les tableaux 1 et 2, montre un empilage hors invention et a été réalisé selon la structure décrite par la demande de brevet WO 2009/029466 A1.

Dans cet exemple comparatif, le revêtement diélectrique D1 est constitué de 30,7 nm de stannate de zinc et de 8 nm de ZnO, les revêtements diélectriques D2 et D3 sont formés respectivement de 58,6 nm et de 54,8 nm de stannate de zinc chacun entouré de 8 nm de ZnO de part et d'autre, et D4 est formé de 8 nm de ZnO suivi de 24,6 nm de stannate de zinc et de 4 nm de $TiO_2$. Les trois couches fonctionnelles sont formées d'argent. Une couche sacrificielle de Ti donnant lieu à 2 nm de $TiO_2$ dans le produit fini est déposée sur chaque couche d'argent. Le substrat est en verre sodo-calcique ordinaire.

On constate notamment que la sélectivité est très faible.

**Exemples 7 à 12**.

Les exemples 7 à 12 ont été réalisés de la même manière, selon les mêmes structures et avec les mêmes matériaux que l'exemple 1 et se rapportent au second mode de réalisation de l'invention. Dans ces exemples, les couches de protection en métal sacrificiel Ti, déposées sur la première couche fonctionnelle IR1 pour les exemples 7 à 9 et 11, ou sur les trois couches fonctionnelles IR1, IR2 et IR3 pour l'exemple 10, sont destinées à former en même temps des couches absorbantes Abs1, Abs2 et Abs3 dans le produit fini. L'atmosphère oxydante du plasma lors du dépôt de la couche suivante va oxyder partiellement cette couche sacrificielle de titane. L'épaisseur géométrique de la couche de Ti telle que déposée est suffisante pour qu'il reste dans le produit fini du Ti à caractère métallique qui forme la couche absorbante Abs1, Abs2 ou Abs3 d'épaisseur spécifiée dans le tableau 1.

En variante, on peut aussi déposer en plus, directement sur la couche d'argent avant de déposer la couche absorbante, une fine couche de 1 à 2 nm de TiOx ou de ZnOx éventuellement dopé à l'aluminium, en atmosphère neutre à partir d'une cathode céramique respectivement d'oxyde de titane ou de zinc, éventuellement dopés.

Les propriétés correspondantes sont données dans le tableau 2.

**Exemples 13 à 15.**

Les exemples 13 à 15 ont été réalisés de la même manière, selon les mêmes structures et avec les mêmes matériaux que l'exemple 1, sauf pour ce qui est précisé ci-après, et se rapportent au second mode de réalisation de l'invention. Dans ces exemples, une couche absorbante de la lumière a été déposée au-dessus de la première couche fonctionnelle IR1.

Dans l'exemple 13, une couche absorbant la lumière TiN de 5,7 nm d'épaisseur géométrique a été déposée directement sur la première couche d'argent IR1 par pulvérisation cathodique en atmosphère d'azote à partir d'une cible de titane métallique. On a ensuite déposé la couche de protection de Ti sacrificielle de 1,4 nm d'épaisseur géométrique.

Dans l'exemple 14, on a déposé une couche de protection de TiOx, déposée en atmosphère neutre à partir d'une cathode céramique d'oxyde de titane, de 2,4 nm d'épaisseur géométrique directement sur la première couche d'argent IR1. On a ensuite déposé une couche absorbant la lumière TiN de 5,7 nm d'épaisseur géométrique enfermée entre deux couches de 23,6 nm d'épaisseur optique de $Si_3N_4$, par pulvérisation cathodique en atmosphère d'azote à partir de cibles de titane métallique et de silicium dopé à l'aluminium. La structure directement après IR1 est dès lors la suivante : IR1/Ti/$Si_3N_4$/TiN/$Si_3N_4$/ZSO5/ZSO9/IR2. Dans le tableau 1, la valeur de 57 Å pour la couche absorbante a été mise entre parenthèse dans la colonne Abs1 pour signifier que cette couche n'est en fait pas au bon endroit dans la séquence de la structure réelle, puisque la couche absorbante se trouve en réalité enfermée entre deux couches $Si_3N_4$. L'épaisseur optique totale indiquée pour le revêtement diélectrique D2 tient compte de l'épaisseur des deux couches $Si_3N_4$ aussi bien que de l'épaisseur des couches ZSO5 et ZSOg.

L'exemple 15 a la même structure que l'exemple 14, excepté que la couche absorbant la lumière est ici une couche de 1,2 nm d'épaisseur géométrique de Pd, également enfermée entre deux couches $Si_3N_4$ de 23,6 nm chacune.

Les propriétés de ces exemples sont indiquées dans le tableau 2.

Tableau 1.

| Exemple | D1 (Å) | IR1 (Å) | Abs1 (Å) | D2 (Å) | IR2 (Å) | Abs2 (Å) | D3 (Å) | IR3 (Å) | Abs3 (Å) | D4 (Å) | D1/D4 | D3/D2 | IR3/IR2 | D3/D4 | D3/IR3 | D2/D1 |
|---|---|---|---|---|---|---|---|---|---|---|---|---|---|---|---|---|
| 1 | 886 | 139 | - | 1601 | 111 | - | 997,9 | 129 | - | 511 | 1,73 | 0,62 | 1,16 | 1,95 | 7,73 | 1,81 |
| 2 | 908 | 132 | - | 1605 | 120 | - | 1125 | 148 | - | 564 | 1,61 | 0,70 | 1,23 | 2,00 | 7,63 | 1,77 |
| 3 | 974 | 136 | - | 1644 | 115 | - | 1040 | 142 | - | 540 | 1,80 | 0,63 | 1,24 | 1,93 | 7,31 | 1,69 |
| 4 | 837 | 135 | - | 1669 | 119 | - | 950,4 | 131 | - | 511 | 1,64 | 0,57 | 1,10 | 1,86 | 7,25 | 1,99 |
| 5 | 649 | 80 | - | 1153 | 64,8 | - | 1253 | 217 | - | 786 | 0,83 | 1,09 | 3,36 | 1,59 | 5,76 | 1,78 |
| 6 | 908 | 132 | - | 1605 | 120 | - | 1125 | 148 | - | 564 | 1,61 | 0,70 | 1,23 | 2,00 | 7,63 | 1,77 |
| Comp.1 | 786 | 97,2 | - | 1514 | 106 | - | 1437 | 80 | - | 799 | 0,98 | 0,95 | 0,76 | 1,80 | 17,90 | 1,93 |
| 7 | 666 | 148 | 27 | 1345 | 64,8 | - | 840,5 | 126 | - | 617 | 1,08 | 0,63 | 1,94 | 1,36 | 6,67 | 2,02 |
| 8 | 664 | 161 | 23 | 1459 | 82 | - | 758,1 | 108 | - | 540 | 1,23 | 0,52 | 1,32 | 1,40 | 6,99 | 2,20 |
| 9 | 786 | 157 | 23 | 1489 | 95 | - | 768 | 102 | - | 489 | 1,61 | 0,52 | 1,07 | 1,57 | 7,51 | 1,89 |
| 10 | 966 | 123 | 12 | 1525 | 116 | 4 | 1093 | 128 | 9 | 481 | 2,01 | 0,72 | 1,10 | 2,27 | 8,54 | 1,58 |
| 11 | 1052 | 150 | 19 | 1468 | 108 | - | 953 | 118 | - | 485 | 2,17 | 0,65 | 1,09 | 1,96 | 8,10 | 1,40 |
| 12 | 871 | 159 | 27 | 1532 | 95 | - | 749 | 99 | - | 496 | 1,76 | 0,49 | 1,04 | 1,51 | 7,55 | 1,76 |
| 13 | 663 | 161 | 57 | 1491 | 82 | - | 758 | 108 | - | 540 | 1,23 | 0,51 | 1,32 | 1,40 | 6,99 | 2,25 |
| 14 | 663 | 157 | (57) | 1460 | 82 | - | 778 | 108 | - | 540 | 1,23 | 0,53 | 1,32 | 1,44 | 7,18 | 2,20 |
| 15 | 663 | 161 | (15) | 1460 | 93 | - | 778 | 112 | - | 540 | 1,23 | 0,53 | 1,20 | 1,44 | 6,98 | 2,20 |

Tableau 2.

| Exemple | S | $A_E$ % | g % | $T_L$ % | a* ($T_L$) | b* ($T_L$) | L* ($R_C$) | a* ($R_C$) | b* ($R_C$) | L* ($R_V$) | a* ($R_V$) | b* ($R_V$) | Shift a* | Shift b* | Deltacol ($R_V$) | Deltacol ($R_C$) |
|---|---|---|---|---|---|---|---|---|---|---|---|---|---|---|---|---|
| 1 | 1,99 | 33 | 30 | 59,8 | -5,3 | 2,9 | 46,7 | -0,6 | 1,1 | 43,1 | -4,8 | -10,1 | -0,4 | 3,4 | 1,8 | 2,1 |
| 2 | 2 | 34 | 29,7 | 59,5 | -5,8 | 1,8 | 46,5 | 2,7 | 1,2 | 42,9 | -4,5 | -7,7 | -0,5 | 4,6 | 1,7 | 2,1 |
| 3 | 2 | 34 | 29,2 | 58,4 | -5,5 | 3,3 | 48,6 | 1,1 | 0,9 | 45,1 | -5,3 | -10,5 | -0,8 | 4,8 | 1,7 | 2,3 |
| 4 | 1,99 | 33 | 29,3 | 58,3 | -5,5 | 3,2 | 48,6 | 2,2 | 1,5 | 45,6 | -4,9 | -10,2 | -0,9 | 3,8 | 1,7 | 2,2 |
| 5 | 1,98 | 36 | 27,7 | 54,8 | -7,5 | 3,8 | 53,5 | 7,7 | -3,3 | 49,2 | -3,0 | -7,3 | 1,7 | 2,0 | 1,7 | 2,1 |
| 6 | 2 | 33,7 | 29,7 | 59,5 | -5,8 | 1,8 | 46,5 | 2,6 | 1,2 | 43,0 | -4,6 | -7,6 | -0,7 | 4,6 | 1,7 | 2,0 |
| Comp,1 | 1,72 | 33,2 | 38,5 | 66,1 | -3,9 | 2,5 | 41,9 | 0,3 | -4,9 | 39,1 | -2,0 | -3,4 | 1,9 | 2,4 | | |
| 7 | 1,92 | 41 | 24,5 | 47,0 | -6,7 | 1,5 | 41,9 | -3,2 | -7,0 | 50,1 | -4,8 | -9,7 | -3,2 | 0,0 | 2,5 | 4,4 |
| 8 | 1,95 | 39 | 24,5 | 47,7 | -6,5 | 1,1 | 43,4 | -6,6 | -3,2 | 50,7 | -4,5 | -9,3 | -2,2 | -0,2 | 2,4 | 3,3 |
| 9 | 1,97 | 40 | 24,8 | 48,9 | -7,0 | 1,0 | 42,7 | -5,6 | -1,8 | 47,6 | -4,6 | -10,9 | -0,9 | 0,0 | 2,2 | 2,6 |
| 10 | 1,94 | 44 | 24,8 | 48,0 | -7,8 | -1,0 | 43,4 | -0,2 | 5,2 | 38,2 | -4,9 | -11,1 | 0,6 | 3,4 | 2,2 | 1,7 |
| 11 | 2,03 | 40 | 25,1 | 50,8 | -7,5 | 2,2 | 43,4 | -4,6 | -1,7 | 44,6 | -5,0 | -14,1 | 1,1 | 1,5 | 2,5 | 3,8 |
| 12 | 1,97 | 40 | 24,3 | 47,9 | -7,2 | 2,7 | 42,9 | -5,2 | -4,5 | 49,1 | -3,5 | -13,9 | -3,6 | 1,8 | 2,2 | 2,7 |
| 13 | 1,99 | 34,6 | 25 | 49,6 | -5,3 | 2,9 | 47,2 | -9,3 | -1,7 | 53,4 | -4,8 | -8,3 | -2,9 | 1,3 | | |
| 14 | 1,99 | 35,3 | 24,2 | 48,0 | -6,6 | 1,1 | 44,2 | -7,0 | -2,0 | 52,4 | -1,8 | -6,6 | -1,4 | 1,4 | | |
| 15 | 1,93 | 37,6 | 25,1 | 48,4 | -5,3 | 3,2 | 41,7 | 0,5 | -2,9 | 48,4 | -6,9 | -13,5 | -2,2 | 1,2 | | |

**Revendications**

1. Substrat transparent portant un empilage multicouche de contrôle solaire comprenant trois couches fonctionnelles (IR1, IR2, IR3) à base d'un matériau réfléchissant le rayonnement infrarouge et quatre revêtements diélectriques (D1, D2, D3, D4), de telle sorte que chaque couche fonctionnelle (IR) soit entourée par des revêtements diélectriques (D), où l'épaisseur géométrique de la deuxième couche fonctionnelle (IR2) en partant du substrat est inférieure d'au moins 4% aux épaisseurs géométriques des première (IR1) et troisième (IR3) couches fonctionnelles et où le rapport de l'épaisseur optique du revêtement diélectrique (D3) disposé entre la deuxième (IR2) et la troisième (IR3) couche fonctionnelle sur l'épaisseur géométrique de la troisième couche fonctionnelle (IR3) en partant du substrat est compris entre 5,5 et 10.

2. Substrat transparent selon la revendication 1, **caractérisé en ce que** l'épaisseur géométrique de la deuxième couche fonctionnelle (IR2) en partant du substrat est inférieure d'au moins 8% à l'épaisseur géométrique de la troisième couche fonctionnelle (IR3).

3. Substrat transparent selon l'une des revendications 1 ou 2, **caractérisé en ce que** l'épaisseur géométrique de la deuxième couche fonctionnelle (IR2) en partant du substrat est inférieure d'au moins 8% aux épaisseurs géométriques des première (IR1) et troisième (IR3) couches fonctionnelles.

4. Substrat transparent selon l'une quelconque des revendications précédentes, **caractérisé en ce que** l'épaisseur géométrique la deuxième couche fonctionnelle (IR2) en partant du substrat est inférieure d'au moins 15% à l'épaisseur géométrique de la troisième couche fonctionnelle (IR3).

5. Substrat transparent selon l'une quelconque des revendications précédentes, **caractérisé en ce que** le rapport de l'épaisseur optique du revêtement diélectrique (D3) disposé entre la deuxième (IR2) et la troisième (IR3) couches fonctionnelles sur l'épaisseur optique du revêtement diélectrique final (D4) disposé au-delà de la troisième couche fonctionnelle en partant du substrat est compris entre 1,3 et 2,6.

6. Substrat transparent selon la revendication 5, **caractérisé en ce que** le rapport de l'épaisseur optique du revêtement diélectrique (D3) disposé entre la deuxième (IR2) et la troisième (IR3) couches fonctionnelles sur l'épaisseur optique du revêtement diélectrique final (D4) disposé au-delà de la troisième couche fonctionnelle en partant du substrat est compris entre 1,5 et 2,1.

7. Substrat transparent selon l'une quelconque des revendications précédentes, **caractérisé en ce que** le rapport de l'épaisseur optique du revêtement diélectrique (D3) disposé entre la deuxième (IR2) et la troisième (IR3) couche fonctionnelle sur l'épaisseur géométrique de la troisième couche fonctionnelle (IR3) en partant du substrat est compris entre 7 et 9.

8. Substrat transparent selon l'une quelconque des revendications précédentes, **caractérisé en ce que** le rapport de l'épaisseur optique du revêtement diélectrique (D1) disposé entre le substrat et la première couche fonctionnelle (IR1) sur l'épaisseur optique du dernier revêtement diélectrique (D4) disposé au-delà de la troisième couche fonctionnelle est compris entre 0,5 et 2,7, de préférence entre 1,3 et 2,3.

9. Substrat transparent selon la revendication 8, **caractérisé en ce que** le rapport de l'épaisseur optique du revêtement diélectrique (D1) disposé entre le substrat et la première couche fonctionnelle (IR1) sur l'épaisseur optique du dernier revêtement diélectrique (D4) disposé au-delà de la troisième couche fonctionnelle (IR3) est compris entre 0,8 et 2.

10. Substrat transparent selon l'une quelconque des revendications précédentes, **caractérisé en ce que** le rapport de l'épaisseur optique du troisième revêtement diélectrique (D3) sur l'épaisseur optique du second revêtement diélectrique (D2) disposé entre la première couche fonctionnelle (IR1) en partant du substrat et la seconde couche fonctionnelle (IR2) est compris entre 0,4 et 1,1.

11. Substrat transparent selon l'une quelconque des revendications précédentes, **caractérisé en ce que** le rapport de l'épaisseur optique du second revêtement diélectrique (D2) sur l'épaisseur optique du premier revêtement diélectrique (D1) est compris entre 1,15 et 3,4 et de préférence entre 1,6 et 2,1.

12. Substrat transparent selon l'une des revendications précédentes, **caractérisé en ce que** l'empilage comprend au moins une couche absorbante de telle sorte que, lorsque l'empilage est déposé sur une feuille de verre clair ordinaire de 6 mm d'épaisseur, l'absorption lumineuse totale $A_L$ du verre portant l'empilage mesurée côté substrat est d'au moins 25%, de préférence d'au moins 30% et avantageusement d'au moins 33%.

13. Vitrage multiple comprenant au moins un substrat transparent selon l'une des revendications précédentes.

14. Vitrage multiple selon la revendication 13, **caractérisé en ce qu'**il présente un facteur solaire compris entre 14 et 36%, une transmission lumineuse comprise entre 38 et 69%, une réflexion lumineuse extérieure, côté verre de la feuille de verre revêtue, comprise entre 7 et 25% et une teinte en réflexion extérieure dont la valeur b* est inférieure ou égale à a* et dont la variation angulaire de a* entre 0° et 55° est comprise entre -3,6 et 2.

15. Vitrage feuilleté comprenant au moins un substrat transparent selon l'une des revendications précédentes assemblé à une feuille de matière vitreuse à l'intervention d'une matière plastique adhésive.

**Patentansprüche**

1. Transparentes Substrat, das einen mehrschichtigen Sonnenschutzstapel trägt, der drei Funktionsschichten (IR1, IR2, IR3) auf Basis eines die Infrarotstrahlung reflektierenden Materials und vier dielektrische Beschichtungen (D1, D2, D3, D4) umfasst, so dass jede Funktionsschicht (IR) von dielektrischen Beschichtungen (D) umgeben ist, wobei die geometrische Dicke der zweiten Funktionsschicht (IR2) ausgehend von dem Substrat um mindestens 4 % geringer als die geometrischen Dicken der ersten (IR1) und der dritten (IR3) Funktionsschicht ist und wobei das Verhältnis der optischen Dicke der dielektrischen Beschichtung (D3), die zwischen der zweiten (IR2) und der dritten (IR3) Funktionsschicht angeordnet ist, zur geometrischen Dicke der dritten Funktionsschicht (IR3) ausgehend von dem Substrat zwischen 5,5 und 10 beträgt.

2. Transparentes Substrat nach Anspruch 1, **dadurch gekennzeichnet, dass** die geometrische Dicke der zweiten Funktionsschicht (IR2) ausgehend von dem Substrat um mindestens 8 % geringer als die geometrische Dicke der dritten Funktionsschicht (IR3) ist.

3. Transparentes Substrat nach einem der Ansprüche 1 oder 2, **dadurch gekennzeichnet, dass** die geometrische Dicke der zweiten Funktionsschicht (IR2) ausgehend von dem Substrat um mindestens 8 % geringer als die geometrischen Dicken der ersten (IR1) und der dritten (IR3) Funktionsschicht ist.

4. Transparentes Substrat nach einem der vorhergehenden Ansprüche, **dadurch gekennzeichnet, dass** die geometrische Dicke der zweiten Funktionsschicht (IR2) ausgehend von dem Substrat um mindestens 15 % geringer als die geometrische Dicke der dritten Funktionsschicht (IR3) ist.

5. Transparentes Substrat nach einem der vorhergehenden Ansprüche, **dadurch gekennzeichnet, dass** das Verhältnis der optischen Dicke der dielektrischen Beschichtung (D3), die zwischen der zweiten (IR2) und der dritten (IR3) Funktionsschicht angeordnet ist, zur optischen Dicke der abschließenden dielektrischen Beschichtung (D4), die jenseits der dritten Funktionsschicht ausgehend von dem Substrat angeordnet ist, zwischen 1,3 und 2,6 beträgt.

6. Transparentes Substrat nach Anspruch 5, **dadurch gekennzeichnet, dass** das Verhältnis der optischen Dicke der dielektrischen Beschichtung (D3), die zwischen der zweiten (IR2) und der dritten (IR3) Funktionsschicht angeordnet ist, zur optischen Dicke der abschließenden dielektrischen Beschichtung (D4), die jenseits der dritten Funktionsschicht ausgehend von dem Substrat angeordnet ist, zwischen 1,5 und 2,1 beträgt.

7. Transparentes Substrat nach einem der vorhergehenden Ansprüche, **dadurch gekennzeichnet, dass** das Verhältnis der optischen Dicke der dielektrischen Beschichtung (D3), die zwischen der zweiten (IR2) und der dritten (IR3) Funktionsschicht angeordnet ist, zur optischen Dicke der dritten Funktionsschicht (IR3) ausgehend von dem Substrat zwischen 7 und 9 beträgt.

8. Transparentes Substrat nach einem der vorhergehenden Ansprüche, **dadurch gekennzeichnet, dass** das Verhältnis der optischen Dicke der dielektrischen Beschichtung (D1), die zwischen dem Substrat und der ersten Funktionsschicht (IR1) angeordnet ist, zur optischen Dicke der letzten dielektrischen Beschichtung (D4), die jenseits der dritten Funktionsschicht angeordnet ist, zwischen 0,5 und 2,7, bevorzugt zwischen 1,3 und 2,3 beträgt.

9.   Transparentes Substrat nach Anspruch 8, **dadurch gekennzeichnet, dass** das Verhältnis der optischen Dicke der dielektrischen Beschichtung (D1), die zwischen dem Substrat und der ersten Funktionsschicht (IR1) angeordnet ist, zur optischen Dicke der letzten dielektrischen Beschichtung (D4), die jenseits der dritten Funktionsschicht (IR3) angeordnet ist, zwischen 0,8 und 2 beträgt.

10.  Transparentes Substrat nach einem der vorhergehenden Ansprüche, **dadurch gekennzeichnet, dass** das Verhältnis der optischen Dicke der dritten dielektrischen Beschichtung (D3) zur optischen Dicke der zweiten dielektrischen Beschichtung (D2), die zwischen der ersten Funktionsschicht (IR1) ausgehend von dem Substrat und der zweiten Funktionsschicht (IR2) angeordnet ist, zwischen 0,4 und 1,1 beträgt.

11.  Transparentes Substrat nach einem der vorhergehenden Ansprüche, **dadurch gekennzeichnet, dass** das Verhältnis der optischen Dicke der zweiten dielektrischen Beschichtung (D2) zur optischen Dicke der ersten dielektrischen Beschichtung (D1) zwischen 1,15 und 3,4 und bevorzugt zwischen 1,6 und 2,1 beträgt.

12.  Transparentes Substrat nach einem der vorhergehenden Ansprüche, **dadurch gekennzeichnet, dass** der Stapel mindestens eine absorbierende Schicht umfasst, so dass, wenn der Stapel auf einer gewöhnlichen Klarglasscheibe von 6 mm Dicke angeordnet ist, die gesamte Lichtabsorption $A_L$ des den Stapel tragenden Glases, substratseitig gemessen, mindestens 25 %, bevorzugt mindestens 30 % und vorteilhafterweise mindestens 33 % beträgt.

13.  Mehrfachverglasung, umfassend mindestens ein transparentes Substrat nach einem der vorhergehenden Ansprüche.

14.  Mehrfachverglasung nach Anspruch 13, **dadurch gekennzeichnet, dass** sie einen G-Wert zwischen 14 und 36 %, eine Lichttransmission zwischen 38 und 69 % und eine äußere Lichtreflexion, auf der Glasseite der beschichteten Glasscheibe, zwischen 7 und 25 % und eine Farbe in der äußeren Reflexion aufweist, deren Wert b* kleiner als oder gleich a* ist und deren Winkeländerung von a* zwischen 0° und 55° zwischen -3,6 und 2 beträgt.

15.  Verbundverglasung, umfassend mindestens ein transparentes Substrat nach einem der vorhergehenden Ansprüche, das mit einer Scheibe aus Glasmaterial unter Mitwirkung eines klebenden Kunststoffs verbunden ist.

### Claims

1.   Transparent substrate bearing a solar-control multilayer stack comprising three functional layers (IR1, IR2, IR3) based on a material that reflects infrared radiation and four dielectric coatings (D1, D2, D3, D4), so that each functional layer (IR) is surrounded by dielectric coatings (D), wherein the geometric thickness of the second functional layer (IR2) starting from the substrate is at least 4% less than the geometric thicknesses of the first and third functional layers (IR1, IR3) and wherein the ratio of the optical thickness of the dielectric coating (D3) positioned between the second and third functional layers (IR2, IR3) to the geometric thickness of the third functional layer (IR3) starting from the substrate is between 5.5 and 10.

2.   Transparent substrate according to Claim 1, **characterized in that** the geometric thickness of the second functional layer (IR2) starting from the substrate is at least 8% less than the geometric thickness of the third functional layer (IR3).

3.   Transparent substrate according to either of Claims 1 and 2, **characterized in that** the geometric thickness of the second functional layer (IR2) starting from the substrate is at least 8% less than the geometric thicknesses of the first and third functional layers (IR1, IR3).

4.   Transparent substrate according to any one of the preceding claims, **characterized in that** the geometric thickness of the second functional layer (IR2) starting from the substrate is at least 15% less than the geometric thickness of the third functional layer (IR3).

5.   Transparent substrate according to any one of the preceding claims, **characterized in that** the ratio of the optical thickness of the dielectric coating (D3) positioned between the second and third functional layers (IR2, IR3) to the optical thickness of the final dielectric coating (D4) positioned beyond the third functional layer starting from the substrate is between 1.3 and 2.6.

6.   Transparent substrate according to Claim 5, **characterized in that** the ratio of the optical thickness of the dielectric coating (D3) positioned between the second and third functional layers (IR2, IR3) to the optical thickness of the final dielectric coating (D4) positioned beyond the third functional layer starting from the substrate is between 1.5 and 2.1.

7. Transparent substrate according to any one of the preceding claims, **characterized in that** the ratio of the optical thickness of the dielectric coating (D3) positioned between the second and third functional layers (IR2, IR3) to the geometric thickness of the third functional layer (IR3) starting from the substrate is between 7 and 9.

8. Transparent substrate according to any one of the preceding claims, **characterized in that** the ratio of the optical thickness of the dielectric coating (D1) positioned between the substrate and the first functional layer (IR1) to the optical thickness of the last dielectric coating (D4) positioned beyond the third functional layer is between 0.5 and 2.7, preferably between 1.3 and 2.3.

9. Transparent substrate according to Claim 8, **characterized in that** the ratio of the optical thickness of the dielectric coating (D1) positioned between the substrate and the first functional layer (IR1) to the optical thickness of the last dielectric coating (D4) positioned beyond the third functional layer (IR3) is between 0.8 and 2.

10. Transparent substrate according to any one of the preceding claims, **characterized in that** the ratio of the optical thickness of the third dielectric coating (D3) to the optical thickness of the second dielectric coating (D2) positioned between the first functional layer (IR1) starting from the substrate and the second functional layer (IR2) is between 0.4 and 1.1.

11. Transparent substrate according to any one of the preceding claims, **characterized in that** the ratio of the optical thickness of the second dielectric coating (D2) to the optical thickness of the first dielectric coating (D1) is between 1.15 and 3.4 and preferably between 1.6 and 2.1.

12. Transparent substrate according to one of the preceding claims, **characterized in that** the stack comprises at least one absorbent layer such that, when the stack is deposited on a sheet of standard clear glass having a thickness of 6 mm, the total light absorption $A_L$ of the glass bearing the stack, measured on the substrate side, is at least 25%, preferably at least 30% and advantageously at least 33%.

13. Multiple glazing comprising at least one transparent substrate according to one of the preceding claims.

14. Multiple glazing according to Claim 13, **characterized in that** it has a solar factor between 14 and 36%, a light transmission between 38 and 69%, an external light reflection, on the glass side of the coated glass sheet, between 7 and 25% and a colour in external reflection for which the value $b^*$ is less than or equal to $a^*$ and for which the angular variation of $a^*$ between 0° and 55° is between -3.6 and 2.

15. Laminated glazing comprising at least one transparent substrate according to one of the preceding claims joined to a sheet of glassy material by means of an adhesive plastic.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2009029466 A1
- EP 645352 A1

- PH 02111644 A
- WO 2003093188 A